# EUROPEAN PATENT APPLICATION

(11) **EP 1 643 655 A1**
(43) Date of publication of application: **05.04.2006**
(21) Application number: 03741273.1
(22) Date of filing: 08.07.2003
(51) Int. Cl.: H04B 1/38, H04M 1/02, G06K 19/00

(54) **COMMUNICATION TERMINAL DEVICE, POWER SUPPLY METHOD, AND POWER SUPPLY PROGRAM**

(71) Applicant: FUJITSU LIMITED, Kawasaki-shi, Kanagawa 211-8588 (JP)
(72) Inventor: MORI, Shinichiro c/o FUJITSU LIMITED, Kawasaki-shi, Kanagawa 211-8588 (JP)
(74) Representative: Sunderland, James Harry
(86) International application number: PCT/JP2003/008662
(87) International publication number: WO 2005/004342

(57) **Abstract**

A communication terminal device mounted with a contactless IC card including an IC and an antenna module, wherein the IC is mounted on a control substrate of the communication terminal device, and the antenna module is mounted on a cell cover or on a cell. The communication terminal device includes an electric connection path for electrically connecting between the IC and the antenna module, an electromagnetic shielding sheet mounted between the antenna module and the control substrate, and an electric insulation sheet mounted between the antenna module and the electromagnetic shielding sheet.

## Description

### TECHNICAL FIELD

The present invention relates to a communication terminal device mounted with a contactless IC card including an IC and an antenna module. More particularly, the invention relates to a communication terminal device mounted with a contactless IC card including an IC and an antenna module, which can improve both mountability of the contactless IC card and a communication distance, and can reduce noise in the communication terminal device due to radio interference.

### BACKGROUND ART

Contactless IC cards receive an electric wave transmitted from a contactless IC card reader/writer, and detect data by activating the IC card. Recently, use of such contactless IC cards is expanding rapidly. The contactless IC card is used as an Automated Teller Machine card, a commuter ticket used at a station ticket gate, an admission ticket for a concert, and the like. Popularity of communication terminal devices such as a portable telephone, a PHS, and a PDA is increasing at an even faster speed, and functions of the communication terminal devices are also being diversified rapidly. In this situation, it is certainly anticipated that a communication terminal device mounted with a contactless IC card including an IC and an antenna module will be realized in the near future.

For example, Patent document 1 discloses a conventional technique that examines a mounting position of a contactless IC card, which includes an IC and an antenna module, in a communication terminal device. A Patent Document 2 discloses a conventional technique of accommodating plural contactless IC cards in a card holder, sandwiching an electromagnetic shielding plate and a conductor plate between the contactless IC cards, activating each contactless IC card independently, and detecting data.
(Patent document 1) Japanese Patent Application Laid-Open No. 2002-218031
(Patent document 2) Japanese Patent Application Laid-Open No. 2000-268146

Although the conventional technique disclosed in the Patent Document 1 examines a mounting position of the contactless IC card, which includes an IC and an antenna module, in the communication terminal device, the IC and the antenna module are integrally mounted. Therefore, the contactless IC card cannot be mounted easily. Further, a communication distance of the antenna module is short, and the communication terminal device is affected by noise due to radio interference. According to the conventional technique disclosed in the Patent Document 2, although it is possible to accommodate plural contactless IC cards in the card holder, sandwich the electromagnetic shielding plate and the conductor plate between the contactless IC cards, activate each contactless IC card independently, and detect data, a technique of improving the communication distance of the antenna module and reducing noise in the communication terminal device due to radio interference is not disclosed therein.

### DISCLOSURE OF INVENTION

A communication terminal device mounted with a contactless IC card including an IC and an antenna module, wherein the communication terminal device has the IC and the antenna module disposed separately, and includes an electric connection path for electrically connecting between the IC and the antenna module.

As described above, according to the present invention, the IC and the antenna module are disposed separately, and the electric connection path for electrically connecting between the IC and the antenna module is provided. Therefore, mountability of the contactless IC card and the communication distance can be improved, and noise applied to the communication terminal device due to radio interference can be reduced.

A communication terminal device mounted with a contactless IC card including an IC and an antenna module, the communication terminal device including a switching signal detector that detects a folding of the communication terminal device; and a power controller that controls to start supplying power to the IC when the switching signal detector detects a folding of the communication terminal device.

A power supply method applied to a communication terminal device mounted with a contactless IC card including an IC and an antenna module, the power supply method including a switching signal detecting step that detects a folding of the communication terminal device; and a power controlling step that controls to start supplying power to the IC when the switching signal detecting step detects a folding of the communication terminal device.

A power supply program applied to a communication terminal device mounted with a contactless IC card including an IC and an antenna module, the power supply program causing a computer to execute a switching signal detecting step that detects a folding of the communication terminal device; and a power controlling that controls to start supplying power to the IC when the switching signal detecting stet detects a folding of the communication terminal device.

According to the present invention, power supply to the IC is started when folding of the communication terminal device is detected. Therefore, power can be supplied stably from the communication terminal device to the IC. Consequently, the degree of freedom of disposing the IC and the antenna module increases, thereby improving mountability of the contactless IC card.

A communication terminal device mounted with a contactless IC card including an IC and an antenna module, the communication terminal device including a power controller that controls to start supplying power to the IC when the antenna module receives an electric wave.

A power supply method applied to a communication terminal device mounted with a contactless IC card including an IC and an antenna module, the power supply method including a power controlling step that controls to start supplying power to the IC when the antenna module receives an electric wave.

A power supply program applied to a communication terminal device mounted with a contactless IC card including an IC and an antenna module, the power supply program causing a computer to execute a power controlling step that controls to start supplying power to the IC when the antenna module receives an electric wave.

According to the present invention, power supply to the IC is started when the antenna module receives an electric wave. Therefore, power is supplied stably from the communication terminal device to the IC. Consequently, the degree of freedom of disposing the IC and the antenna module increases, thereby improving mountability of the contactless IC card.

### BRIEF DESCRIPTION OF DRAWINGS

Fig. 1 depicts a layout of an antenna module of a contactless IC card in a communication terminal device, and an electrical connection between the antenna module and the communication terminal device according to a first embodiment of the present invention;
Fig. 2 depicts a layout of an antenna module of a contactless IC card of a communication terminal device and an electrical connection between the antenna module and the communication terminal device according to a second embodiment;
Fig. 3 depicts a layout of an electromagnetic shielding sheet mounted on a communication terminal device according to a third embodiment;
Fig. 4 depicts a layout of an electromagnetic shielding sheet and an electric insulation sheet mounted on a communication terminal device according to a fourth embodiment;
Fig. 5 depicts an experimental configuration for measuring a communication distance of an antenna module mounted on the communication terminal device shown in Fig. 4;
Fig. 6 is a functional block diagram of a configuration of a communication terminal system according to a fifth embodiment;
Fig. 7 is a flowchart of a processing procedure of controlling power supply to a contactless IC card performed by a communication terminal device shown in Fig. 6;
Fig. 8 is a functional block diagram of a configuration of a communication terminal telephone system according to a sixth embodiment; and
Fig. 9 is a flowchart of a processing procedure of controlling power supply to a contactless IC card performed by a communication terminal device shown in Fig. 8.

### BEST MODE(S) FOR CARRYING OUT THE INVENTION

### Embodiment

Exemplary embodiments of a communication terminal device according to the present invention will be explained in detail with reference to the accompanying drawings. In a first embodiment, incorporating an IC of a contactless IC card into a communication terminal device, and mounting an antenna module on a cell cover are explained. In a second embodiment, incorporating an IC of a contactless IC card into a communication terminal device, and mounting an antenna module on a cell main body are explained. In a third embodiment, disposing an electromagnetic shielding sheet, thereby reducing noise applied to the communication terminal device in the first and the second embodiments is explained. In a fourth embodiment, disposing an electromagnetic shielding sheet and an electric insulation sheet, thereby improving a communication distance of the antenna module in the first and the second embodiments is explained. In a fifth embodiment, supplying power to a contactless IC card from a communication terminal device by detecting a switching signal of the communication terminal device is explained. In a sixth embodiment, supplying power from a communication terminal device to a contactless IC card by detecting that the contactless IC card has received an electric wave from a contactless IC card reader/writer is explained.

### First Embodiment

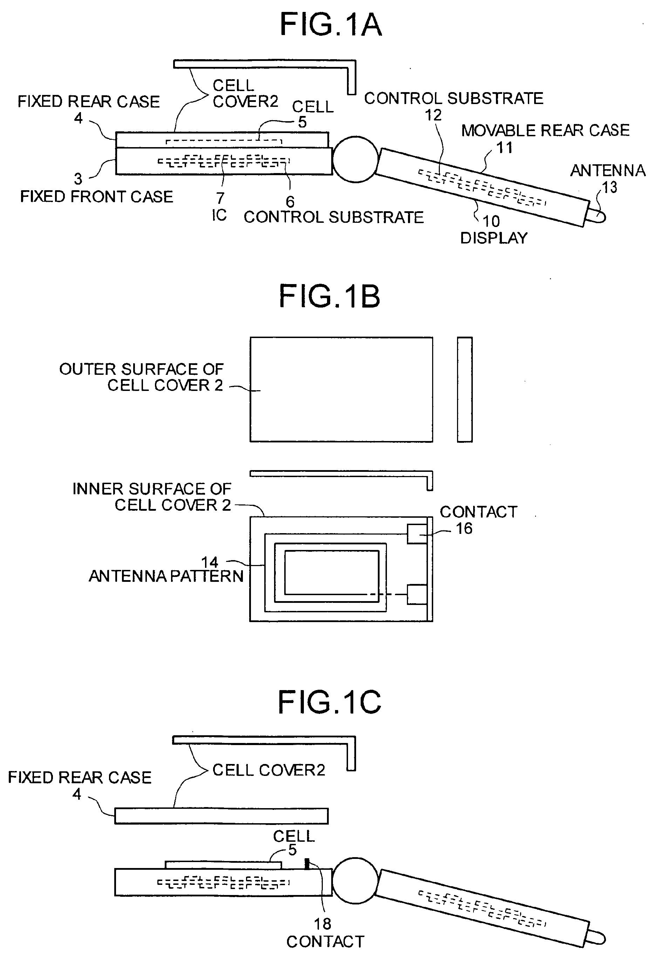

In the first embodiment, incorporating an IC of a contactless IC card into a communication terminal device, and mounting an antenna module on a cell cover are explained. Fig. 1 depicts a layout of an antenna module of a contactless IC card in a communication terminal device, and an electrical connection between the antenna module and the communication terminal device according to the first embodiment.

As shown in Fig. 1(a), a communication terminal device 1 includes a cell cover 2, a fixed front case 3, a fixed rear case 4, a cell 5, a control substrate 6, a display 10, a movable rear case 11, a control substrate 12, and an antenna 13. A microphone and an operating unit disposed with keys for carrying out various kinds of input operations are provided on the front face of the fixed front case 3. The microphone and the operating unit are not shown in Fig. 1(a). The control substrate 6 is disposed on the fixed front case 3. An IC 7 of a contactless IC card is disposed on the control substrate 6. The cell 5 is disposed on the fixed rear case 4. The cell 5 is a secondary cell and can be replaced by removing the cell cover 2. The display 10 is a display device that displays data, a menu screen, or images. Specifically, the display 10 is a liquid crystal display device. The control substrate 12 is disposed in the movable rear case 11. The antenna 13 that is extendable and has a rod shape is provided at the end of the movable rear case 11.

The contactless IC card carries out data communications using electric waves of a low frequency band of about a few mega hertz to several tens of mega hertz received from the contactless IC card reader/writer, and also receives a power supply. Communication distance is about a few centimeters to several tens of centimeters. Specifically, as shown in Fig. 1(b), the contactless IC card includes the IC 7 mounted on the control substrate, and an antenna pattern 14 and a contact 16 mounted are on the cell cover 2. The antenna pattern 14 is coated with a conductor such as copper and aluminum or is adhered with a thin foil. The coating includes deposition, thermal spraying, and plating. Any one of the methods for forming a film on the conductor can be used. The contact 16 of the antenna pattern is connected to a contact 18 on the surface of the control substrate that the cell cover 2 faces when the cell cover 2 is fitted, as shown in Fig. 1(c). As a result, the antenna module is electrically connected to the IC 7 of the contactless IC card on the control substrate 6.

As described above, in the first embodiment, the IC and the antenna module are disposed separately, and an electric connection path for electrically connecting between the IC and the antenna module is provided. Therefore, mountability of the contactless IC card can be improved, and noise applied to the communication terminal device due to radio interference can be reduced.

Moreover, because the IC 7 is mounted on the control substrate 6 of the communication terminal device 1, mountability of the contactless IC card can be improved.

Further, because the antenna module is mounted on the cell cover 2 of the communication terminal device 1, mountability of the contactless IC card can be improved, and noise applied to the communication terminal device due to radio interference can be reduced.

Moreover, because the antenna module has an antenna pattern formed by coating a conductor or by adhering a foil, and a contact, mountability of the contactless IC card can be improved.

The electric connection path is formed by connecting between the contact of the antenna module and the contact on the surface of the control substrate facing the cell cover when the cell cover is fitted, thereby electrically connecting between the antenna module and the IC. Therefore, mountability of the contactless IC card can be improved.

### Second Embodiment

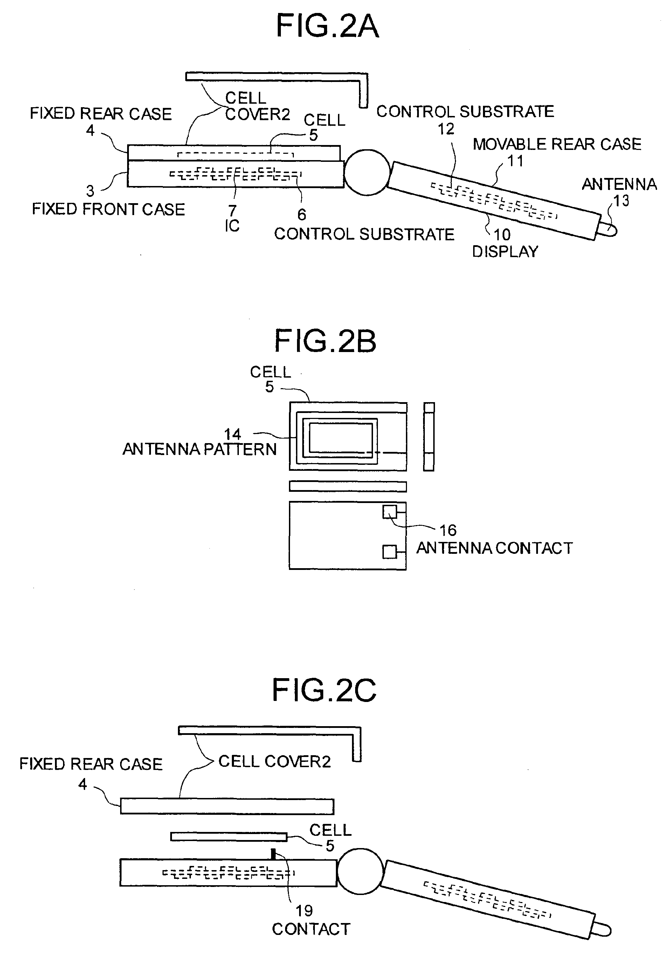

In the first embodiment, incorporating the IC 7 of the contactless IC card into the communication terminal device 1, and mounting the antenna module on the cell cover 2 are explained. However, the invention is not limited to this. Alternatively, the IC 7 of the contactless IC card can be incorporated into the communication terminal device, and the antenna module can be mounted on the cell 5. Therefore, in the second embodiment, incorporating the IC 7 of the contactless IC card into the communication terminal device, and mounting the antenna module on the cell 5 are explained. Fig. 2 depicts a layout of the antenna module of the contactless IC card of the communication terminal device and the electrical connection between the antenna module and the communication terminal device 1 according to the second embodiment. The layout of the antenna module of the contactless IC card and the electrical connection between the antenna module and the communication terminal device 1 according to the second embodiment are substantially the same as the layout of the antenna module of the contactless IC card and the electrical connection between the antenna module and the communication terminal device according to the first embodiment. Therefore, an explanation of like constituent parts is omitted and only different parts are explained.

As shown in Fig. 2(b), the antenna module of the contactless IC card includes the antenna pattern 14 and the contact 16 mounted on the cell 5. As shown in Fig. 2(c), when the cell 5 is fitted, the contact 16 of the antenna pattern makes contact with the contact 19 on the surface of the control substrate facing the cell 5. As a result, the antenna module is electrically connected to the IC 7 of the contactless IC card on the control substrate 6.

As described above, in the second embodiment, the IC 7 and the antenna module are disposed separately, and an electric connection path for electrically connecting the IC with the antenna module is provided. Therefore, mountability of the contactless IC card can be improved, and noise applied to the communication terminal device due to radio interference can be reduced.

Because the IC 7 is mounted on the control substrate 6 of the communication terminal device 1, mountability of the contactless IC card can be improved.

Moreover, because the antenna module is mounted on the cell 5 of the communication terminal device 1, mountability of the contactless IC card can be improved, and noise applied to the communication terminal device due to radio interference can be reduced.

Furthermore, because the antenna module has an antenna pattern formed by coating a conductor or by adhering a foil, and a contact, mountability of the contactless IC card can be improved.

The electric connection path is formed by connecting between the contact of the antenna module and the contact on the surface of the control substrate facing the cell 5 when the cell main body 5 is fitted, thereby electrically connecting the antenna module with the IC 7. Therefore, mountability of the contactless IC card can be improved. Third Embodiment

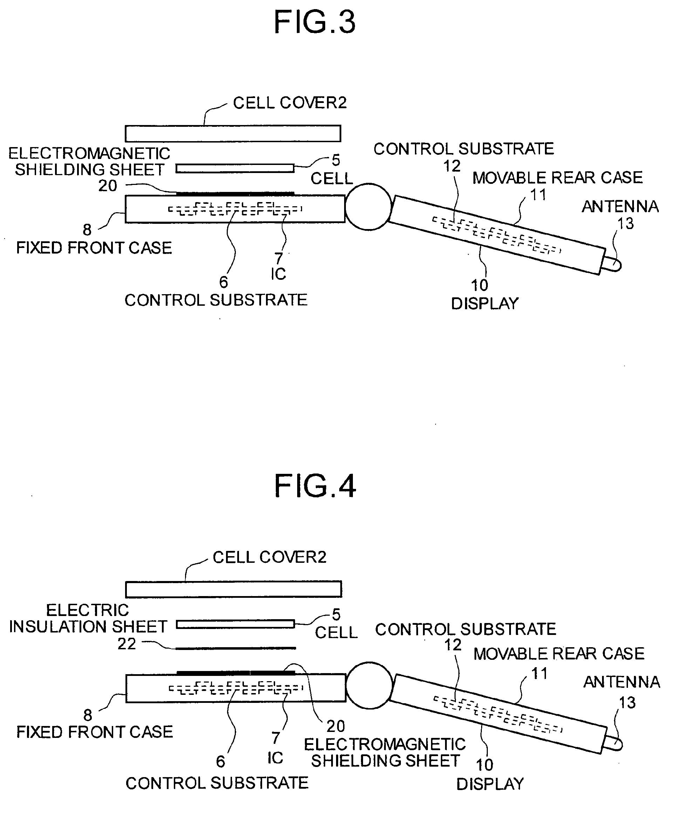

In the first and the second embodiments, incorporating the IC 7 of the contactless IC card into the communication terminal device, and mounting the antenna module on the cell cover and the cell main body are explained respectively. However, the invention is not limited to these. Alternatively, it is possible to dispose an electromagnetic shielding sheet between the IC 7 of the contactless IC card and the antenna module, thereby reducing noise applied to the communication terminal device. Therefore, in the third embodiment, disposing the electromagnetic shielding sheet, thereby reducing noise applied to the communication terminal device 1 in the first and the second embodiments is explained. Fig. 3 depicts a layout of the electromagnetic shielding sheet mounted on the communication terminal device according to the third embodiment.

As shown in Fig. 3, an electromagnetic shielding sheet 20 is mounted on a surface between either the cell cover 2 or the cell 5 and the IC 7 on the control substrate 6. The electromagnetic shielding sheet 20 is a thin sheet having high permeability and high electric insulation. Specifically, powder of a highly permeable material such as pure ion and permalloy is mixed into an insulating resin, for example, an epoxy resin used for a molding material of an IC, and this mixture is rolled out into a sheet shape. This electromagnetic shielding sheet 20 is mounted between the mounting surface of the antenna module and the IC 7 on the control substrate 6. With this arrangement, a direction of magnetic field lines bends, and radiation noise that causes communication failure of the antenna 13 of the communication terminal device 1 decreases. Consequently, this prevents degradation in sensitivity and a shifting of a resonance point due to an eddy current or the like, generated when the magnetic field lines pass through the control substrate 6.

Regarding a relative positional relationship between the antenna pattern 14 and the electromagnetic shielding sheet 20, as long as the antenna pattern 14 and the electromagnetic shielding sheet 20 are laid out in this order, they can be separate from each other, or can be simply laminated or connected together. For example, the antenna module can have the conductive antenna pattern 14 formed on the electromagnetic shielding sheet 20.

As explained above, in the third embodiment, an electromagnetic shielding unit is further provided between the antenna module and the control substrate. Therefore, mountability of the contactless IC card and a communication distance can be improved. Further, noise applied to the communication terminal device due to radio interference can be reduced.

Because the electromagnetic shielding unit is the electromagnetic shielding sheet, mountability of the contactless IC card can be improved. Further, noise applied to the communication terminal device due to radio interference can be reduced.

Moreover, because the antenna module has the conductive antenna pattern formed on the electromagnetic shielding sheet, mountability of the contactless IC card and a communication distance can be improved. Noise applied to the communication terminal device due to radio interference can be reduced.

The electric connection path is formed by providing a contact on the antenna module and by connecting between this contact and the contact on the surface of the control substrate facing a cell accommodation cover when the cell accommodation cover is fitted, thereby electrically connecting between the antenna module and the IC. Therefore, mountability of the contactless IC card can be improved. Noise applied to the communication terminal device due to radio interference can be reduced.

The electric connection path is formed by providing a contact on the antenna module and by connecting between this contact and the contact on the surface of the control substrate facing the cell main body when the cell main body is fitted, thereby electrically connecting between the antenna module and the IC. Therefore, mountability of the contactless IC card can be improved and noise applied to the communication terminal device due to radio interference can be reduced.

Because the antenna module includes the electromagnetic shielding sheet, the antenna pattern mounted on the electromagnetic shielding sheet, and the contact, mountability of the contactless IC card can be improved. Further, noise applied to the communication terminal device due to radio interference can be reduced.

### Fourth Embodiment

In the third embodiment, disposing the electromagnetic shielding sheet between the IC 7 of the contactless IC card and the antenna module, thereby reducing noise applied to the communication terminal device is explained. However, the invention is not limited to this. Alternatively, it is possible to dispose an electric insulation sheet between the antenna module of the contactless IC card and the electromagnetic shielding sheet, thereby improving a communication distance. Therefore, in the fourth embodiment, disposing the electric insulation sheet between the antenna module of the contactless IC card and the electromagnetic shielding sheet, thereby improving a communication distance of the antenna module in the third embodiment is explained. Fig. 4 depicts a layout of the electromagnetic shielding sheet and the electric insulation sheet mounted on the communication terminal device according to the fourth embodiment.

As shown in Fig. 4, an electric insulation sheet 22 is mounted on a surface between either the cell cover 2 or the cell 5 and the electromagnetic shielding sheet 20. Specifically, the electric insulation sheet 22 is a thin sheet of an electric insulation material such as polyimide having a thickness of 0.01 millimeter to 0.1 millimeter, for example. This electric insulation sheet 22 is mounted between the surface mounted with the antenna module and the electromagnetic shielding sheet 20. With this arrangement, a communication distance of the antenna module can be increased.

Regarding a relative positional relationship among the antenna pattern 14, the electric insulation sheet 22, and the electromagnetic shielding sheet 20, as long as the antenna pattern 14, the electric insulation sheet 22, and the electromagnetic shielding sheet 20 are laid out in this order, they can be separate from each other, or can be simply laminated or connected together. For example, the antenna module can have the electric insulation sheet 22 laminated on the electromagnetic shielding sheet 20, and the conductive antenna pattern 14 formed on the electric insulation sheet 22.

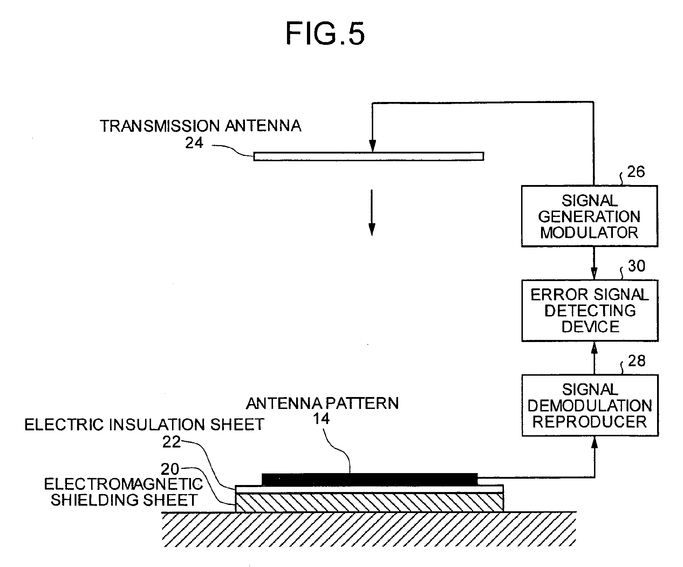

Although the reason why the communication distance of the antenna module increases when the electric insulation sheet 22 is laminated between the antenna pattern 14 and the electromagnetic shielding sheet 20 cannot be theoretically explained sufficiently, it is confirmed by experiment. The experiment can be reproduced, and has significant result. Fig. 5 depicts an experimental configuration for measuring a communication distance of the antenna module mounted on the communication terminal device shown in Fig. 4.

As shown in Fig. 5, the electromagnetic shielding sheet 20, the insulation sheet 22, and the antenna module are simply laminated. A transmission antenna 24 is disposed in a direction perpendicular to the antenna pattern 14. A bit error of the antenna pattern 14 is measured by changing a distance between the antenna pattern 14 and the transmission antenna 24.

In the measurement, a signal generation modulator 26 modulates a carrier wave of 13.56 megahertz with a binary digital signal, and transmits the wave from the transmission antenna 24. The antenna pattern 14 receives the electric wave, and a signal demodulation reproducer 28 demodulates the wave into a digital signal and reproduces the signal. An error signal detecting device 30 compares the digital signal generated by the signal generation modulator 26 with the digital signal reproduced by the signal demodulation reproducer 28, thereby detecting a bit error. The error signal detecting device 30 obtains a distance between the transmission antenna 24 and the antenna pattern when the bit error occurs.

In this measurement, it is confirmed that when the electric insulation sheet 22 is laminated on the electromagnetic shielding sheet 20, a communication distance increases by 4 centimeters from a communication distance of 10 centimeters to 12 centimeters when the electric insulation sheet 22 is not laminated.

As explained above, in the fourth embodiment, the electric insulating unit is further provided between the antenna module and the electromagnetic shielding unit. Therefore, mountability of the contactless IC card and a communication distance can be improved. Noise applied to the communication terminal device due to radio interference can be reduced.

Because the electric insulating unit is the electric insulation sheet 22, mountability of the contactless IC card and a communication distance can be improved. Noise applied to the communication terminal device due to radio interference can be reduced.

Moreover, because the antenna module has the electric insulation sheet 22 laminated on the electromagnetic shielding sheet 20 and has the conductive antenna pattern 14 formed on the electric insulation sheet 22, mountability of the contactless IC card and a communication distance can be improved. Noise applied to the communication terminal device due to radio interference can be reduced.

### Fifth Embodiment

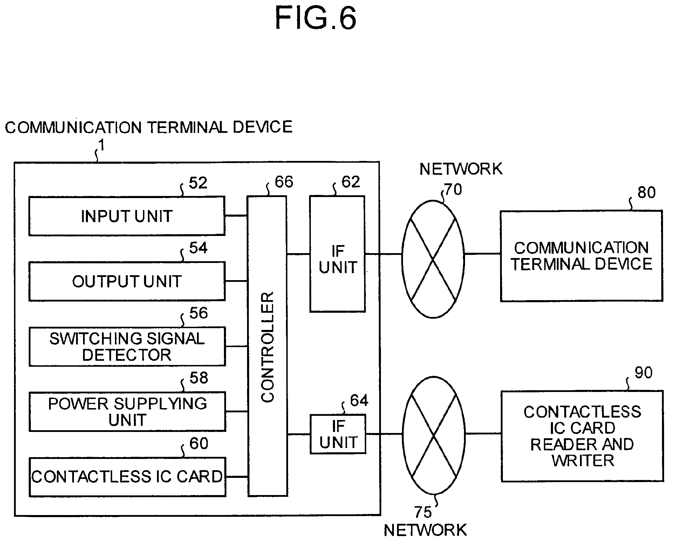

In the first to the fourth embodiments, it is explained that the contactless IC card receives an electric wave from the contactless IC card reader/writer and receives a power supply. In the fifth embodiment, supplying power to the contactless IC card from the communication terminal device 1 by detecting a switching signal of the communication terminal device 1 is explained. Fig. 6 is a functional block diagram of a configuration of a communication terminal system according to the fifth embodiment.

As shown in Fig. 6, the communication terminal device 1 includes an input unit 52, an output unit 54, a switching signal detector 56, a power supplying unit 58, a contactless IC card 60, an IF unit 62 of the communication terminal device, an IF unit 64 of the contactless IC card, a controller 66, networks 70 and 75, a communication terminal device 80, and a card reader/writer 90.

The communication terminal devices 1 and 80 transmit and receive voice and data using an electric wave of a frequency band of 900 megahertz to a few gigahertz. The contactless IC card reader/writer 90 exchanges data with the contactless IC card 60 using an electric wave of frequency bands of 4.9 megahertz and 13.56 megahertz, and also supplies power to the contactless IC card 60. For example, the contactless IC card reader/writer 90 may be a reader/writer for an Automated Teller Machine card, a commuter ticket used at a station ticket gate, an admission ticket for a concert, and the like. The network 70 is a radio network used between the communication terminal devices 1 and 80. The network 75 is a radio network used between the contactless IC card 60 and the contactless IC card reader/writer 90.

The input unit 52 includes keys used for selecting on a menu screen and inputting destination telephone numbers and documents to be transmitted through emails, and also includes a microphone for inputting voice. The output unit 54 includes an image display device that displays the menu screen, data, and images, and a microphone for outputting voice.

The switching signal detector 56 is a sensor that detects a folding of the communication terminal device 1 when it is folded, and transmits a signal. Specifically, the switching signal detector 56 is a contact sensor or a magnetic force sensor. For example, a contact sensor or a magnetic force sensor that is disposed in the fixed front case 3 of the communication terminal device 1 shown in Fig. 1, and a corresponding contact or a magnet that is disposed on the fixed front case 3 on the surface with the display 10. With this arrangement, when the communication terminal device 1 is folded, the switching signal detector 56 can detect the folding of the communication terminal device 1.

The power supplying unit 58 supplies power to the contactless IC card, and is specifically the cell 5 shown in Fig. 1. The IF unit 62 is a communication IF for communicating with the communication terminal device 80 via the network 70. Specifically, the IF unit 62 is the antenna 13 shown in Fig. 1.

The contactless IC card 60 includes the IC and the antenna module. The IF unit 64 is a radio IF for communicating with the contactless IC card reader/writer 90. The controller 66 controls the entire communication terminal device 1. The controller 66 controls the flow of data in each processing unit upon reception of a request from the user.

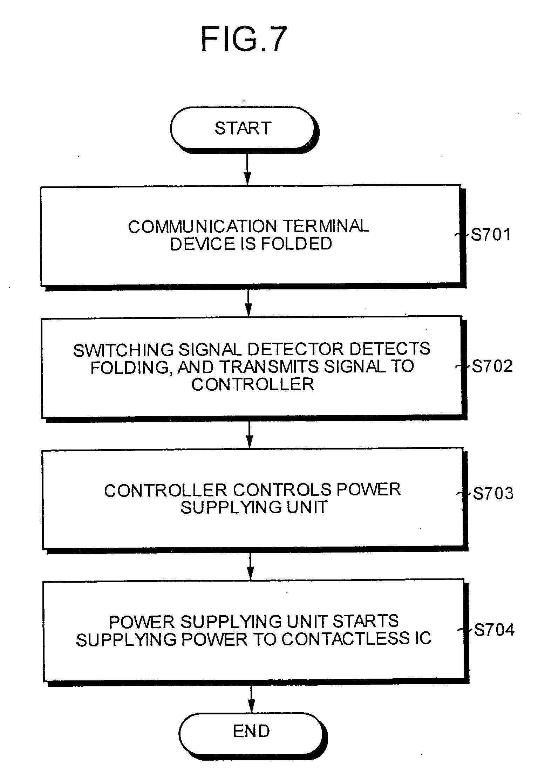

A processing procedure of controlling power supply to the contactless IC card 60 performed by the communication terminal device 1 shown in Fig. 6 is explained next. Fig. 7 is a flowchart of the processing procedure of controlling power supply to the contactless IC card performed by the communication terminal device shown in Fig. 6.

As shown in Fig. 7, when the communication terminal device 1 is folded (step S701), the switching signal detector 56 detects the folding of the communication terminal device 1, and transmits a signal to the controller 66 (step S702). Upon receiving the signal from the switching signal detector 56, the controller 66 has the power supplying unit 58 supply power to the contactless IC card 60 (step S703). When the communication terminal device 1 is folded, the power supplying unit 58 starts supplying power to the contactless IC card 60 (step S704).

As described above, in the fifth embodiment, the switching signal detector 56 detects the folding of the communication terminal device 1. When the folding of the communication terminal device 1 is detected, the controller 66 controls the power supplying unit 58 to start supplying power to the contactless IC card 60. Therefore, power can be supplied stably from the communication terminal device 1 to the contactless IC card 60. Consequently, the degree of freedom of disposing the IC and the antenna module increases, thereby improving mountability of the contactless IC card.

### Sixth Embodiment

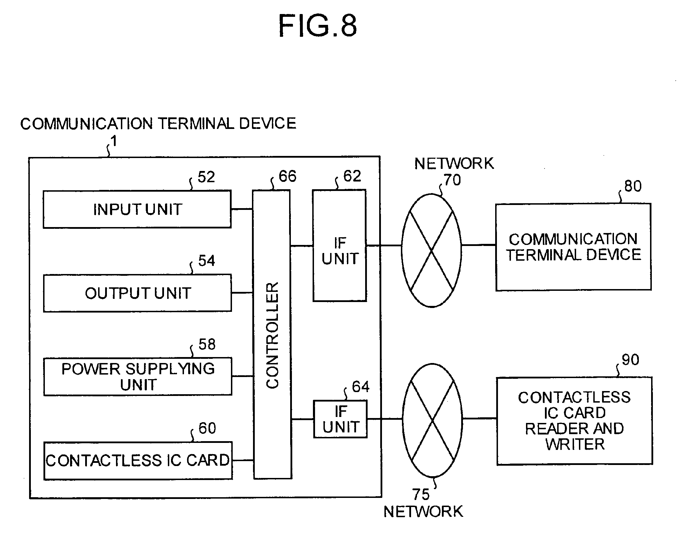

In the fifth embodiment, supplying power to the contactless IC card 60 from the communication terminal device 1 by detecting a switching signal of the communication terminal device 1 is explained. However, the present invention is not limited to this. Alternatively, the communication terminal device 1 can supply power to the contactless IC card 60 by detecting that the contactless IC card 60 has received an electric wave from the contactless IC card reader/writer 90. Therefore, in the sixth embodiment, supplying power from the communication terminal device 1 to the contactless IC card 60 by detecting that the contactless IC card 60 has received an electric wave from the contactless IC card reader/writer 90 is explained. Fig. 8 is a functional block diagram of a configuration of a communication terminal telephone system according to the sixth embodiment.

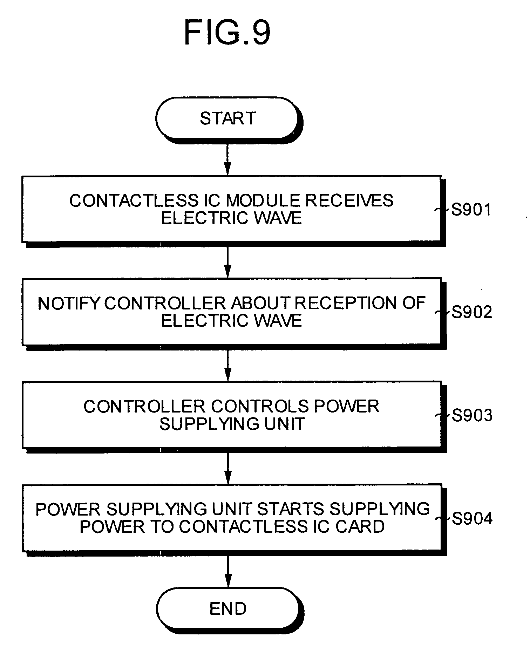

The functional block diagram according to the sixth embodiment is the same as the functional block diagram according to the fifth embodiment except that the switching signal detector 56 is excluded from the functional block diagram according to the sixth embodiment. Therefore, explanation of the functional block diagram is omitted, and a processing procedure of controlling power supply to the contactless IC card performed by the communication terminal device 1 shown in Fig. 8 is explained below. Fig. 9 is a flowchart of the processing procedure of controlling power supply to the contactless IC card performed by the communication terminal device 1 shown in Fig. 8.

As shown in Fig. 9, when the contactless IC card 60 receives an electric wave from the contactless IC card reader/writer 90 (step S901), the contactless IC card notifies the controller 66 about the reception of the electric wave (step S902).

Upon reception of the signal from the contactless IC card 60, the controller 66 controls the power supplying unit 58 to supply power to the contactless IC card 60 (step S903), and the power supplying unit 58 starts supplying power to the contactless IC card 60 (step S904).

As explained above, in the sixth embodiment, when the antenna module receives an electric wave, the controller 66 controls to start supplying power to the contactless IC card. Therefore, power is supplied stably from the communication terminal device 1 to the IC 7. Consequently, the degree of freedom of disposing the IC and the antenna module increases, thereby improving mountability of the contactless IC card.

### Other Embodiments

While the communication terminal device according to the first to the sixth embodiments is explained above, the invention can be implemented in various other embodiments within the technical idea described in claims.

For example, while the IC 7 of the contactless IC card is mounted on the control substrate 6, and the antenna module is mounted on the inner surface of the cell cover 2 or on the cell 5 in the first and the second embodiments, the invention is not limited to this. The IC 7 can be also disposed at other place than the control substrate 6, and the antenna module can be disposed at other place than the inner surface of the cell cover 2 or the cell 5. For example, the IC 7 can be disposed on the inner surface of the fixed front case 3 or on the control substrate 12. Similarly, the antenna module can be disposed on the outer surface of the cell cover 2, or on the inner surface or the outer surface of the movable rear case 11.

While the material prepared by mixing pure iron and permalloy into epoxy resin is used for the electromagnetic shielding sheet, and polyimide is used for the electric insulation sheet in the third and the fourth embodiments, the present invention is not limited to this, and other materials can be also used. The insulation material of the electromagnetic shielding sheet and the material of the electric insulation sheet can be the same, such as epoxy resin. These materials can be integrated together by changing the distribution of the mixture of pure iron and permalloy in the thickness direction of the sheet.

As described above, according to the present invention, the IC and the antenna module are disposed separately, and the electric connection path for electrically connecting between the IC and the antenna module is provided. Therefore, mountability of the contactless IC card and the communication distance can be improved, and noise applied to the communication terminal device due to radio interference can be reduced.

According to the present invention, power supply to the IC is started when folding of the communication terminal device is detected. Therefore, power can be supplied stably from the communication terminal device to the IC. Consequently, the degree of freedom of disposing the IC and the antenna module increases, thereby improving mountability of the contactless IC card.

According to the present invention, power supply to the IC is started when the antenna module receives an electric wave. Therefore, power is supplied stably from the communication terminal device to the IC. Consequently, the degree of freedom of disposing the IC and the antenna module increases, thereby improving mountability of the contactless IC card.

### INDUSTRIAL APPLICABILITY

As described above, a communication terminal device with a contactless IC card including an IC and an antenna module according to the present invention is suitable for a communication terminal device such as a portable telephone, a PHS, and a PDA.

## Claims

1. A communication terminal device mounted with a contactless IC card including an IC and an antenna module, wherein
the communication terminal device has the IC and the antenna module disposed separately, and comprises an electric connection path for electrically connecting between the IC and the antenna module.

2. The communication terminal device according to claim 1, wherein
the IC is mounted on a control substrate of the communication terminal device.

3. The communication terminal device according to claim 1, wherein
the antenna module is mounted on a cell cover of the communication terminal device.

4. The communication terminal device according to claim 1, wherein
the antenna module is mounted on a cell main body of the communication terminal device.

5. The communication terminal device according to claim 1, further comprising an electromagnetic shielding unit between the antenna module and the control substrate.

6. The communication terminal device according to claim 5, wherein
the electromagnetic shielding unit is an electromagnetic shielding sheet.

7. The communication terminal device according to claim 5, further comprising an electric insulating unit between the antenna module and the electromagnetic shielding unit.

8. The communication terminal device according to claim 7, wherein
the electric insulating unit is an electric insulation sheet.

9. The communication terminal device according to claim 1, 3, or 4, wherein
the antenna module comprises an electromagnetic shielding sheet, and an antenna pattern and a contact that are mounted on the electromagnetic shielding sheet.

10. The communication terminal device according to claim 1, 3, or 4, wherein
the antenna module comprises an electromagnetic shielding sheet, an electric insulation sheet laminated on the electromagnetic shielding sheet, and an antenna pattern and a contact that are mounted on the electric insulation sheet.

11. The communication terminal device according to claim 1, 3, or 4, wherein
the antenna module has an antenna pattern formed by coating a conductor or adhering a foil, and a contact.

12. The communication terminal device according to claim 3, wherein
the electric connection path is formed by connecting between a contact of an antenna module and a contact on the surface facing the cell cover when the cell cover is fitted, thereby electrically connecting between the antenna module and the IC.

13. The communication terminal device according to claim 4, wherein
the electric connection path is formed by connecting between a contact of an antenna module and a contact on the surface facing the cell main body when the cell main body is fitted, thereby electrically connecting between the antenna module and the IC.

14. A communication terminal device mounted with a contactless IC card including an IC and an antenna module, the communication terminal device comprising:
a switching signal detector that detects a folding of the communication terminal device; and
a power controller that controls to start supplying power to the IC when the switching signal detector detects a folding of the communication terminal device.

15. A communication terminal device mounted with a contactless IC card including an IC and an antenna module, the communication terminal device comprising:
a power controller that controls to start supplying power to the IC when the antenna module receives an electric wave.

16. A power supply method applied to a communication terminal device mounted with a contactless IC card including an IC and an antenna module, the power supply method comprising:
a switching signal detecting step that detects a folding of the communication terminal device; and
a power controlling step that controls to start supplying power to the IC when the switching signal detector detects a folding of the communication terminal device.

17. A power supply method applied to a communication terminal device mounted with a contactless IC card including an IC and an antenna module, the power supply method comprising:
a power controlling step that controls to start supplying power to the IC when the antenna module receives an electric wave.

18. A power supply program applied to a communication terminal device mounted with a contactless IC card including an IC and an antenna module, the power supply program causing a computer to execute:
a switching signal detecting step that detects a folding of the communication terminal device; and
a power controlling step that controls to start supplying power to the IC when the switching signal detecting step detects a folding of the communication terminal device.

19. A power supply program applied to a communication terminal device mounted with a contactless IC card including an IC and an antenna module, the power supply program causing a computer to execute:
a power controlling step that controls to start supplying power to the IC when the antenna module receives an electric wave.
